# EUROPÄISCHE PATENTSCHRIFT

(11) **EP 0 776 343 B1**
(45) Veröffentlichungstag und Bekanntmachung des Hinweises auf die Patenterteilung: **14.10.1998**
(21) Anmeldenummer: 95929095.8
(22) Anmeldetag: 09.08.1995
(51) Int. Cl.: C08G 18/32, C08G 18/48, C08G 18/42, C08G 18/80, C09K 3/10

(54) **VERWENDUNG VON POLYURETHANEN MIT VERBESSERTEM WEITERREISS-WIDERSTAND ALS DICHTUNGSMASSEN**
USE OF POLYURETHANES WITH IMPROVED RESISTANCE TO TEAR PROPAGATION AS SEALANTS
EMPLOI DE POLYURETHANNES PRESENTANT UNE RESISTANCE AMELIOREE A LA DECHIRURE AMORCEE COMME DES MASSES D'ETANCHEITE

(30) Priorität: 18.08.1994 DE 4429345
(43) Veröffentlichungstag der Anmeldung: 04.06.1997
(73) Patentinhaber: Henkel Kommanditgesellschaft auf Aktien, 40191 Düsseldorf (DE)
(72) Erfinder: Westfechtel, Alfred, 40724 Hilden (DE); GRÜTZMACHER, Roland, D-42489 Wülfrath (DE); HÖFER, Rainer, D-40477 Düsseldorf (DE)
(86) Internationale Anmeldenummer: EP9503155
(87) Internationale Veröffentlichungsnummer: WO9606123

(56) Entgegenhaltungen:
- EP-A- 0 390 537
- FR-A- 1 386 762
- FR-A- 1 466 730
- GB-A- 1 458 069
- US-A- 3 264 236

## Beschreibung

### Gebiet der Erfindung

Die Erfindung betrifft Polyurethane mit verbessertem Weiterreiß-Widerstand, die Dimerdiol und/oder Trimertriol und/oder einen Dimerdiol-Einheiten enthaltenden Polyether und/oder einen Polyester mit OH-Endgruppen, der aus Polycarbonsäuren bevorzugt aus Dimerfettsäure und/oder Trimerfettsäure und Diolen aufgebaut ist, enthalten.

### Stand der Technik

Dimere Fettalkohole (Dimerdiole) sind seit langem bekannt.

So wird z. B. in der DE-A1 11 98 348 ihre Herstellung durch Dimerisierung von ungesättigten Fettalkoholen mit basischen Erdalkalimetall-Verbindungen bei mehr als 280 °C beschrieben.

Sie können auch durch Hydrierung von dimeren Fettsäuren und/oder deren Estern gemäß der deutschen Auslegeschrift DE-B-17 68 313 hergestellt werden.

Eine andere Möglichkeit zur Herstellung von Dimerdiolen besteht in der Dimerisierung von ungesättigten Alkoholen in Gegenwart von Kieselerde/Tonerde-Katalysatoren und basischer Alkalimetallverbindungen gemäß der internationalen Anmeldung WO 91/13918.

Bei der Herstellung von Dimerfettsäure fällt stets auch ein Anteil an trimerisierter Fettsäure an. Durch destillative Abtrennung der Dimerfettsäure kann diese Trimerfettsäure angereichert werden. Nach Veresterung mit beispielsweise Methanol können die Ester der Trimerfettsäure analog den Estern der Dimerfettsäure zu Trimertriol hydriert werden. Dieses Trimertriol, ein trifunktioneller Alkohol mit 54 C-Atomen, kann ebenfalls im Rahmen der Erfindung eingesetzt werden.

Aus der unveröffentlichten deutschen Patentanmeldung Aktenzeichen P 43 16 245.2 ist es auch bekannt, Dimerdiol in Gegenwart einer Säure unter Wasserabspaltung zu einem Dimerdiol-Einheiten enthaltenden Polyether zu kondensieren.

Dimerdiol oder Trimertriol enthaltende Polyurethane sind ebenfalls bekannt.

Die Verwendung von dimeren und trimeren Fettalkoholen und deren Gemischen in der Polyurethanherstellung ist aus der DE-B1 11 79 660 zur Herstellung von schwefelhaltigen elastischen Überzugsmitteln bekannt.

Es ist auch bekannt, das Dimerdiol als Polyol durch Umsetzung mit Diisocyanaten zur Herstellung von Polyurethan-Überzügen zu verwenden. So werden in der DE-A1 12 25 795 Polyurethanlacke aus dimeren und/oder trimeren Fettalkoholen mit einer durchschnittlichen Anzahl von 36 bzw. 54 C-Atomen beschrieben.

Die EP-B1 0 199 609 beschreibt Polyurethan-Klebschichten, die aus einem NCO-terminierten Prepolymeren auf der Basis von Polyester- oder Polyetherdiolen und Dimerdiol als Kettenverlängerungsmittel aufgebaut sind.

In der DE-A1 42 37 965 werden Dimerdiol enthaltende Polyurethandispersionen und ihre Verwendung für Einbrennlacke beschrieben.

In der unveröffentlichten deutschen Patentanmeldung Aktenzeichen P 43 08 100.2 werden Gießharze beschrieben, deren Hydrolysestabilität durch den Zusatz von Dimerdiol verbessert wurde.

FR-A-1 466 730 offenbart Polyurethane aus einer Isocyanatkomponente, die ein Prepolymer aus einem Dimerdiol mit TDI ist, und einem Dimerdiol als Polyolkomponente.

DE-B-12 25 795 offenbart ein Verfahren zur Herstellung von Polyurethanüberzügen aus Hydroxylgruppen-haltigen Verbindungen und Polyisocyanaten, wobei man als Hydroxylgruppen-haltige Komponente Dimer- und/oder Trimerfettalkohole mit einem durchschnittlichen Gehalt von 36 bzw 54 Kohlenstoffatomen verwendet.

DE-A-42 37 965 offenbart wäßrige Polyurethan-Dispersionen, hergestellt durch Umsetzung von Di- und/oder Polyisocyanaten mit Dimerdiol enthaltenden Polyolmischungen, Kettenverlängerungsmitteln sowie ggf. mit mindestens 3 Hydroxylgruppen versehenen Polyolen und anschließender Dispergierung in Wasser sowie deren Verwendung in Einbrennlacken.

EP-B-199 609 offenbart Klebstoffe, die Polyurethane darstellen, in denen neben Polyesterdiolen oder Polyetherdiolen auch Dimerdiole enthalten sind.

Die Aufgabe der Erfindung war, Polyurethane mit verbessertem Weiterreiß-Widerstand zur Verfügung zu stellen.

Überraschenderweise wurde gefunden, daß Polyurethane, die Dimerdiol-, Trimerdiol- und Dimerfettsäure- oder Trimerfettsäure-Einheiten enthalten, einen hervorragenden Weiterreiß-Widerstand aufweisen.

### Beschreibung der Erfindung

Gegenstand der Erfindung ist die Verwendung von Polyurethanen die aufgebaut sind aus
a) einer Polyolkomponente, die Dimerdiol und/oder Trimertriol und/oder einen Dimerdiol-Einheiten enthaltenden Polyether und/oder einen Polyester mit OH-Endgruppen, der aus Polycarbonsäuren, bevorzugt aus Dimerfettsäure und/oder Trimerfettsäure und Diolen aufgebaut ist, enthält, und
B) einer Isocyanat-Komponente, die Prepolymere enthält, die durch Reaktion von polyfunktionellen Isocyanaten mit Dimerdiol und/ oder Trimertriol und/oder einem Dimerdiol-Einheiten enthaltenden Polyether und/oder einen Polyester mit OH-Endgruppen, der aus Polycarbonsäuren, bevorzugt aus Dimerfettsäure und/oder Trimerfettsäure und Diolen aufgebaut ist, erhältlich sind, wobei mindestens eine der Komponenten A oder B, Dimer- oder Trimerfettsäure oder Dimer- oder Trimerfettalkohol als Bestandteil enthält,
als Dichtungsmassen.

Die Polyolkomponente enthält Dimerdiol und/oder Trimertriol und/oder einem Dimerdiol-Einheiten enthaltenden Polyether und/oder einen Polyester mit OH-Endgruppen, der aus Polycarbonsäuren, bevorzugt aus Dimerfettsäure und/oder Trimerfettsäure und Diolen aufgebaut ist.

Unabhängig von den eingangs beschriebenen Verfahren zur Herstellung der Dimerdiole werden bevorzugt solche Dimerdiole verwendet, die aus Fettsäuren oder deren Estern bzw. Fettalkoholen mit 18 C-Atomen hergestellt worden sind. Auf diese Weise entstehen Dimerdiole mit 36 C-Atomen. Dimerdiole, die nach den oben genannten technischen Verfahren hergestellt worden sind, weisen stets auch wechselnde Mengen an Trimertriolen und monofunktionellen Alkoholen auf. In der Regel liegt dabei der Anteil an Dimerdiolen über 70 Gew.-% und der Rest sind Trimertriole und Monomeralkohole. Im Sinne der Erfindung können sowohl diese Dimerdiole eingesetzt werden als auch reinere Dimerdiole mit über 90 Gew.-% Dimerdiolanteil. Insbesondere bevorzugt werden Dimerdiole mit über 90 bis 99 Gew.-% Dimerdiolanteil, wobei hiervon solche Dimerdiole wiederum bevorzugt sind, deren Doppelbindung zumindest teilweise oder vollständig hydriert sind.

Die Ester der Trimerfettsäure können analog den Estern der Dimerfettsäure zu Trimertriol hydriert werden. Dieses Trimertriol, ein trifunktioneller Alkohol mit 54 C-Atomen, kann ebenfalls im Rahmen der Erfindung eingesetzt werden.
Der Trimeralkohol enthält mindestens 50 Gew.%, bevorzugt mindestens 65 Gew.% an trifunktionellem Alkohol.

Das Dimerdiol oder das Trimerdiol weisen Hydroxylzahlen von 180 bis 215, bevorzugt von 200 bis 210 auf.

Die Dimerdiol-Einheiten enthaltenden Polyether können gemäß der unveröffentlichten deutschen Patentanmeldung Aktenzeichen P 43 16 245.2 durch Säure-katalysierte Polykondensation von geeigneten niedermolekularen Alkylenglykolen bei erhöhter Temperatur hergestellt werden.

Die Dimerdiol-Einheiten enthaltenden Polyether haben eine Hydroxylzahl (OHZ) von weniger als 175, insbesondere 10 bis 100. Dabei gibt die OH-Zahl an, wieviel mg KOH der Essigsäure-Menge äquivalent sind, die von 1 g Substanz bei der Azetylierung gebunden wird.

Die Dimerdiol-Einheiten enthaltenden Polyether sind bei Raumtemperatur (20 °C) flüssig, d.h. sie haben eine Viskosität nach Brookfield bei 25 °C von > 3 000 mPas, insbesondere 3 800 bis 12 000 mPas.

Die Dimerdiol-Einheiten enthaltenden Polyether sind hydrophob, d.h. sie sind bei 20 °C im Wasser praktisch unlöslich, vorzugsweise lösen sich weniger als 1 mg, insbesondere weniger als 0,1 mg in 100 ml Wasser auf.

Unter Dimerdiol-Einheiten enthaltenden Polyethern sind auch die Alkoxylierungsprodukte von Dimerdiol oder Trimertriol zu verstehen, die durch Umsetzung der Hydroxylgruppen von Dimerdiol oder Trimertriol mit Ethylenoxid, Propylenoxid oder Butylenoxid zugänglich sind. Diese Polyether können 1 bis 20, bevorzugt 3 bis 10 mol Alkylenoxid pro mol Dimerdiol oder Trimertriol enthalten.

In einer weiteren Ausführungsform werden Polyester mit OH-Endgruppen verwendet, die durch Veresterung von Polycarbonsäuren, bevorzugt von Dimer- oder Trimerfettsäure, mit Diolen erhalten wurden. Beispiele für geeignete Diole sind Ethylenglykol, Diethylenglykol, Propylenglykol, Neopentylglykol, 1,6-Hexandiol und 1,4-Butandiol.

Bei der Umsetzung von Dicarbonsäuren, insbesondere von Dimerfettsäure mit Diolen liegt das Äquivalentverhältnis OH:COOH im allgemeinen zwischen 1,4:1 und 3:1, bevorzugt zwischen 1,8:1 und 2,2:1. Bei der Umsetzung von Tricarbonsäuren, insbesondere von Trimerfettsäure mit Diolen liegt das Äquivalentverhältnis OH:COOH im allgemeinen zwischen 2,5:1 und 4:1, bevorzugt zwischen 2,7:1 und 3,3:1.

Die Polyolkomponente der erfindungsgemäß einzusetzenden Polyurethane besteht zu 50 bis 100 Gew.%, bevorzugt 70 bis 90 Gew.%, aus Dimerdiol und/oder Trimerdiol und/oder einem Dimerdiol-Einheiten enthaltenden Polyether und/oder einen Polyester mit OH-Endgruppen, der aus Polycarbonsäuren, bevorzugt aus Dimerfettsäure und/oder Trimerfettsäure und Diolen aufgebaut ist, während der Rest ein anderes, in der Polyurethanchemie übliches Polyol darstellt.

Diese restlichen Polyole können Polyether-, Polyester- oder oleochemische Polyole oder Mischungen dieser Verbindungen darstellen.

Eine Übersicht über in der Polyurethanchemie übliche Polyether und Polyester gibt z.B. Ullmannns Enzyklopädie der technischen Chemie, 4. Auflage, Band 19, Verlag Chemie, Weinheim, auf den Seiten 304-5.

Beispiele für geeignete Hydroxylgruppen-teminierte Polyester sind Polyester auf Basis der Polycarbonsäuren wie Adipin-, Phthal-, Malein- und Acelainsäure und den Diolen wie Ethylenglykol, Propylenglykol, Neopentylglykol, 1,6-Hexandiol und 1,4-Butandiol.

Ebenso geeignet sind die polymeren Umsetzungsprodukte von Dimer- oder Trimerfettsäuren mit polyfunktionellen Alkoholen wie beispielsweise Ethylenglycol, Propylenglykol, Neopentylglycol, 1,6-Hexandiol, und 1,4-Butandiol.

Bevorzugt sind Polycaprolactone und Polycarbonate.

Beispiele für geeignete Hydroxylgruppen-terminierte Polyether sind Polyethylenglykol, Polypropylenglykol und - bevorzugt -Polytetrahydrofuran.

Eine weitere Gruppe bevorzugt verwendbarer Polyole stellen die oleochemischen Polyole dar.

Unter oleochemischen Polyolen versteht man Polyole auf Basis natürlicher Öle und Fette, z.B. die Reaktionsprodukte von epoxidierten Fettstoffen mit mono-, di- oder polyfunktionellen Alkoholen oder Glycerinester langkettiger Fettsäuren, die zumindest teilweise mit Hydroxylgruppen substituiert sind.

Eine Untergruppe dieser Verbindungen sind die Ringöffnungsprodukte epoxidierter Triglyceride, also epoxidierter Fettsäureglycerinester, bei denen die Ringöffnung unter Erhalt der Esterbindungen ausgeführt worden ist. Zur Herstellung der Ringöffnungsprodukte kann man von einer Vielzahl epoxidierter Triglyceride pflanzlichen oder tierischen Ursprungs ausgehen. So sind beispielsweise epoxidierte Triglyceride geeignet, die 2 bis 10 Gewichtsprozent Epoxidsauerstoff aufweisen. Derartige Produkte sind durch Epoxidation der Doppelbindungen aus einer Reihe von Fetten und Ölen herstellbar, z.B. Rindertalg, Palmöl, Erdnußöl, Rüböl, Baumwollsaatöl, Sojaöl, Sonnenblumenöl und Leinöl. Besonders bevorzugte epoxidierte Triglyceride sind epoxidiertes Sojaöl und epoxidiertes Leinöl.

Als Alkohole für die Ringöffnung der epoxidierten Triglyceride können Methanol, Ethanol, Propanol, Isopropanol, Butanol, Hexanol, 2-Ethylhexanol, Fettalkohole mit 6 bis 22 C-Atomen, Cyclohexanol, Benzylalkohol, 1,2-Ethandiol, 1,2-Propandiol, 1,3-Propandiol, 1,4-Butandiol, 1,6-Hexandiol, Neopentylglykol, Trimethylolpropan, Glycerin, Trimethylolethan, Pentaerythrit, Sorbit sowie ethergruppenhaltige Hydroxyverbindungen wie Alkylglykole oder oligomere Glykole sowie oligomere Glycerine eingesetzt werden.

Die Ringöffnungsreaktion epoxidierter Fettsäureester oder Triglyceride mit einem Alkohol kann gegebenenfalls von einer Umesterung mit sich selber oder anderen, nachträglich zugefügten Triglyceriden, wie zum Beispiel Palmöl, Erdnußöl, Rüböl, Baumwollsaatöl, Sojaöl, Sonnenblumenöl und Leinöl, gefolgt sein. Solche oleochemischen Polyole sind z.B. in der deutschen Patentanmeldung DE-A1 41 28 649 beschrieben.

Eine weitere Gruppe der oleochemischen Polyole sind Ringöffnungs- und Umesterungsprodukte von epoxidierten Fettsäureestern niederer Alkohole, also von epoxidierten Fettsäuremethyl-, -ethyl-, -propyl- oder -butylestern. Bevorzugt sind hier die Ringöffnungs- oder Umesterungsprodukte mit Alkoholen der Funktionalität 2 bis 4, insbesondere die Umsetzungsprodukte mit Ethylenglykol, Propylenglykol, oligomeren Ethylenglykolen, oligomeren Propylenglykolen, Glycerin, Trimethylolpropan oder Pentaerythrit. Die Herstellung derartiger Produkte kann nach bekannten Epoxidations- oder Ringöffnungsverfahren erfolgen, wobei die Umesterung während oder nach dem Ringöffnungsschritt durch Entfernen des niederen Alkohols aus den Reaktionsgleichgewicht durchgeführt werden kann. Bevorzugt sind Ringöffnungs- und Umesterungsprodukte, bei denen ein molares Verhältnis zwischen epoxidiertem Fettsäureester und dem zur Umsetzung verwendeten Alkohol von 1:1 bis 1:10 angewandt worden ist.

Ebenfalls zu den oleochemischen Polyolen zählen die Umsetzungsprodukte epoxidierter Fettalkohole mit C2-C8-Alkoholen der Funktionalität 1 bis 10, insbesondere 2 bis 4, im molaren Verhältnis der Epoxidgruppen zu den Hydroxylgruppen von 1:1 bis 1:10.

Im Rahmen der Erfindung ist auch die Verwendung von oleochemischen Polyolen möglich, die über die Umesterung von di- oder polyfunktionellen Alkoholen wie z.B. dem Additionsprodukt von Ethylenoxid oder Propylenoxid an Glycerin mit Triglyceriden, wie z.B. Palmöl, Erdnußöl, Rüböl, Baumwollsaatöl, Sojaöl, Sonnenblumenöl und Leinöl, zugänglich sind.

Die Hydroxylzahlen gemäß DIN 53240 der restlichen Polyole liegen im Bereich von von 5 bis 600, vorzugsweise von 20 bis 300, besonders bevorzugt von 50 bis 200.

Die Isocyanat-Komponente der erfindungsgemäß einzusetzenden Polyurethane enthält ein Prepolymer mit NCO-Endgruppen, das durch Reaktion von polyfunktionellen Isocyanaten mit Dimerdiol und/oder Trimerdiol und/oder einem Dimerdiol-Einheiten enthaltenden Polyether und/oder einen Polyester mit OH-Endgruppen, der aus einer Polycarbonsäure, bevorzugt aus einer Dimerfettsäure oder Trimerfettsäure und Diolen aufgebaut ist, erhältlich ist.

Das polyfunktionelle Isocyanat hat eine Funktionalität von 2 bis 4, bevorzugt von 2. Geeignet sind hier sowohl aromatische als auch aliphatische, monocyclische wie polycylische, mehrfunktionelle Isocyanatverbindungen.

Beispielhaft seien 2,4-Toluylendiisocyanat, 2,6-Toluylendiisocyanat, 4,4'-Diisocyanato-diphenylmethan, m-Xylylendiisocyanat, 3-Isocyanatomethyl-3,5,5-trimethylcyclohexylisocyanat, 1,6-Hexandiisocyanat, Naphthylen-1,5-diisocyanat und 2,4,6-Triisocyanatotoluol genannt.

Besonders bevorzugt ist hiervon 4,4'-Diisocyanato-diphenylmethan.

Bei der Herstellung der Prepolymeren liegt das Äquivalent-Verhältnis NCO:OH im allgemeinen zwischen 6:1 und 1,5:1, bevorzugt zwischen 3:1 und 2:1.

Die Isocyanat-Komponente der erfindungsgemäß einzusetzenden Polyurethane besteht zu 50 bis 100 Gew.%, bevorzugt 70 bis 90 Gew.%, aus den Prepolymeren.

Neben den Prepolymeren kann die Isocyanatkomponente noch andere polyfunktionelle Isocyanatverbindungen enthalten.
Eine Übersicht über in der Polyurethanchemie übliche Polyisocyanate gibt z.B. Ullmannns Enzyklopädie der technischen Chemie, 4. Auflage, Band 19, Verlag Chemie, Weinheim, auf Seite 303.

Bevorzugt sind aromatische Diisocyanate wie Diphenylmethandiisocyanat oder Toluylendiisocyanat und insbesondere technisches Diphenylmethandiisocyanat, das Isocyanate mit einer Funktionalität größer als 2 enthält und beispielsweise unter der Bezeichnung Desmodur^{R} VKS-H von Bayer vertrieben wird.

Bei der Herstellung der Polyurethane aus den Komponenten A und B liegt das Äquivalentverhältnis der NCO-Gruppen zu den OH-Gruppen NCO:OH in der Regel im Bereich von 1,2:1 bis 0,8:1, bevorzugt 1,05:1 bis 0,95:1.

Die Polyurethane können weiterhin verschiedene Hilfsstoffe enthalten, die vorzugsweise dem Polyol zugemischt werden. Verwendet werden können hier zum Beispiel Füllstoffe. Als Füllstoffe geeignet sind gegenüber Isocyanaten nicht reaktive, anorganische Verbindungen wie zum Beispiel Kreide oder Gips, gefällte Kieselsäuren, Zeolithe, Bentonite, gemahlene Mineralien sowie andere, dem auf dem Arbeitsgebiet tätigen Fachmann bekannte anorganische Füllstoffe. Weiterhin können auch organische Füllstoffe verwendet werden, insbesondere Faserkurzschnitte und anderes. Bevorzugt sind Füllstoffe, die den Polyurethanen Thixotropie verleihen.

Die erfindungsgemäß einzusetzenden Polyurethane können weiterhin Beschleuniger enthalten. Geeignet sind zum Beispiel tertiäre Basen wie Bis-(N,N-dimethylamino)-diethylether, Dimethylaminocyclohexan, N,N-Dimethylbenzylamin, N-Methylmorpholin sowie die Umsetzungsprodukte von Dialkyl-(β-hydroxyethyl)-amin mit Monoisocyanaten und Veresterungsprodukte von Dialkyl-(β-hydroxyethyl)-amin und Dicarbonsäuren. Ein weiterer wichtiger Beschleuniger ist das 1,4-Diamino-bicyclo-(2.2.2)-octan. Ferner können nichtbasische Substanzen als Beschleuniger verwendet werden. Hier seien Metallverbindungen genannt, beispielsweise Eisenpentacarbonyl, Eisenacetylacetonat sowie Zinn-(II)-(2-ethylhexoat), Dibutylzinndilaurat oder Molybdänglykolat.

Die Herstellung der erfindungsgemäß einzusetzenden Polyurethane erfolgt dadurch, daß die Komponenten A und B gemischt werden.
Im allgemeinen geschieht dies unmittelbar vor der Anwendung, bis dahin werden die beiden Komponenten separat und unter Feuchtigkeitsausschluß gelagert.

In einer bevorzugten Ausführungsform weisen die erfindungsgemäßen Polyurethane einen Weiterreiß-Widerstand nach DIN 53515 von über 10 Nmm⁻¹, insbesondere von über 15 Nmm⁻¹, auf.

Die erfindungsgemäßen Polyurethane werden als Dichtungsmassen z.B. in der Elekro- und Bauindustrie verwendet.

### Beispiele

Alle prozentualen Angaben verstehen sich, sofern nicht anders vermerkt, als Gewichtsprozent.

### Ausgangsverbindungen:

Dimerdiol Sovermol^{R} POL 900, OH-Zahl = 203,
   > 90 % Dimergehalt
Trimertriol Sovermol^{R} POL 930, OH-Zahl = 203,
   > 50 Gew.% Gehalt an Trimeren

### Beispiel 1:

### Herstellung der NCO-terminierten Prepolymeren

Zu einem flüssigen Polyisocyanat wird bei Raumtemperatur und unter Inertgasatmosphäre in ca. 2 h unter Rühren die für den theoretisch berechneten NCO-Wert notwendige Menge Polyol zugetropft. Anschließend wird die Reaktionsmischung solange auf 80 °C erwärmt, bis der NCO-Wert nicht mehr weiter sinkt. Auf entsprechende Weise erhielt man die Prepolymere A bis C.

### 1. Herstellung von Prepolymer A

33,2 Gew.-% Trimertriol
66,8 Gew.-% 4,4'-Diisocyanato-diphenylmethan
Endprodukt: 16,4 % NCO
Brookfield-Viskosität (25 °C): 8.240 mPa/s

### 2. Herstellung von Prepolymer B

33,2 Gew.-% Dimerdiol
66,8 Gew.-% 4,4'-Diisocyanato-diphenylmethan

- Endprodukt:: 16,8 % NCO
- Brookfield-Viskosität (25 °C):: 2.270 mPa/s

### 3. Herstellung von Prepolymer C (Vergleichsbeispiel)

37,68 Gew.-% Polypropylenglykol (PPG 1025, Firma DOW, OH-Zahl = 102
62,32 Gew.-% 4,4'-Diisocyanato-diphenylmethan

- Endprodukt:: 17,0 % NCO
- Brookfield-Viskosität (25 °C):: 2.500 mPa/s

### Beispiel 2: (allgemeine Arbeitsvorschrift)

Die nach Beispiel 1 hergestellten NCO-terminierten Prepolymere (A bis C) werden äquimolar unter Zusatz von 5 % Zeolith (Baylith^{R} L, Bayer) mit folgenden Hydroxylkomponenten vergossen und der Weiterreiß-Widerstand nach DIN 53515 gemessen.

Auf entsprechende Weise erhielt man die in Tabelle 1 angegebenen Polyurethane 2 a-i.

**Tabelle 1**

| Bsp. | Prepolymer | Hydroxylkomponente | Weiterreiß-Widerstand nach DIN 53515 [Nmm⁻¹] |
|---|---|---|---|
| a | A | Trimertriol | 26,4 |
| b | B | Sovermol^{R} POL 900 | 18,4 |
| c | B | Dimerdiol, 76 %ig | 11,8 |
| | | | |
| d | B | Dimerdiol, 68 %ig | 6,4 |
| e | B | Sovermol^{R} 650 NS | 4,6 |
| | | | |
| f | B | lin. Polyesterdiol | 5,5 |
| | | | |
| g | A | Ricinusöl | 5,5 |
| h | C | Ricinusöl | 5,5 |
| i | C | Trimertriol | 6,3 |

Das lineare Polyesterdiol ist ein Polyester aus Diethylenglykol, Neopentylglykol, 1,6-Hexandiol und Adipinsäure mit einer OH-Zahl von 60.

Sovermol^{R} 650 NS ist ein über die Dimerisierung von ungesättigtem Fettalkohol erhältliches Dimerdiol mit einem Dimerengehalt von 68 %.

Die Beispiele 2a - 2c sind erfindungsgemäß.

Die Beispiele 2d und 2e zeigen, daß der Weiterreiß-Widerstand mit dem Dimergehalt des Dimerdiols abnimmt.
Die Beispiele 2f bis 2i zeigen, daß besonders gute Weiterreiß-Widerstände an die Anwesenheit von Dimerdiol oder Trimertriol in der Isocyanat- und der Hydroxylkomponente gebunden sind.

## Patentansprüche

1. Verwendung von Polyurethanen, die aufgebaut sind aus
A) einer Polyolkomponente, die Dimerdiol und/oder Trimertriol und/oder einer Dimerdiol-Einheiten enthaltenden Polyether und/oder einen Polyester mit OH-Endgruppen, der aus Polycarbonsäuren, bevorzugt aus Dimerfettsäure oder Trimerfettsäure und Diolen aufgebaut ist, enthält, und
B) einer Isocyanat-Komponente, die Prepolymere enthält, die durch Reaktion von polyfunktionellen Isocyanaten mit Dimerdiol und/oder Trimertriol und/oder einem Dimerdiol-Einheiten enthaltenden Polyether und/oder einen Polyester mit OH-Endgruppen, der aus Polycarbonsäuren, bevorzugt aus Dimerfettsäure und/oder Trimerfettsäure und Diolen aufgebaut ist, erhältlich sind. wobei mindestens eine der Komponenten A oder B Dimer- oder Trimerfettsäure oder Dimer- oder Trimerfettalkohol als Bestandteile enthält;
als Dichtungsmassen.

2. Verwendung nach Anspruch 1, dadurch gekennzeichnet, daß die Polyolkomponente wenigstens 50 Gew.-% - bezogen auf die Polyolkomponente - an Dimerdiol und/oder Trimertriol und/oder einen Dimerdiol-Einheiten enthaltenden Polyether und/oder einen Polyester mit OH-Endgruppen, der aus Polycarbonsäuren, bevorzugt aus Dimerfettsäure und/oder Trimerfettsäure und Diolen aufgebaut ist, enthält.

3. Verwendung nach den Ansprüchen 1 und 2, dadurch gekennzeichnet, daß die Isocyanat-Komponente wenigstens 50 Gew.-% - bezogen auf die Isocyanat-Komponente - an Prepolymeren enthält.

4. Verwendung nach den Ansprüchen 2 bis 3, dadurch gekennzeichnet, daß die restlichen Polyole der Polyolkomponente aus der Gruppe der Polyether, Polyester und oleochemischen Polyole ausgewählt sind.

5. Verwendung nach den Ansprüchen 2 bis 4, dadurch gekennzeichnet, daß die restlichen Isocyanate der Isocyanatkomponente aromatische Diisocyanate, vorzugsweise Diphenylmethandiisocyanat und insbesondere technisches Diphenylmethandiisocyanat der Funktionalität größer als 2, oder Toluylendiisocyanat darstellen.

6. Verwendung nach den Ansprüchen 1 bis 5, dadurch gekennzeichnet, daß bei der Herstellung des Polyurethans ein Äquivalentverhältnis von NCO:OH von 1,2:1 bis 0,8:1, bevorzugt 1,05:1 bis 0,95:1, eingehalten wird.

7. Verwendung nach den Ansprüchen 1 bis 6, dadurch gekennzeichnet, daß sie einen Weiterreiß-Widerstand von über 10 Nmm⁻¹, insbesondere von über 15 Nmm⁻¹, aufweisen.

## Claims

1. The use of polyurethanes produced from
A) a polyol component containing dimer diol and/or trimer triol and/or a polyether containing dimer diol units and/or an OH-terminated polyester produced from polycarboxylic acids, preferably dimer fatty acid or trimer fatty acid and diols and
B) an isocyanate component containing prepolymers obtainable by reacting polyfunctional isocyanates with dimer diol and/or trimer triol and/or a polyether containing dimer diol units and/or an OH-terminated polyester produced from polycarboxylic acids, preferably dimer fatty acid and/or trimer fatty acid, and diols, at least one of components A or B containing dimer or trimer fatty acid or dimer or trimer fatty alcohol as a constituent,
as sealing compounds.

2. The use claimed in claim 1, characterized in that the polyol component contains at least 50% by weight - based on the polyol component - of dimer diol and/or trimer triol and/or a polyether containing dimer diol units and/or an OH-terminated polyester produced from polycarboxylic acids, preferably dimer fatty acid and/or trimer fatty acid, and diols.

3. The use claimed in claims 1 and 2, characterized in that the isocyanate component contains at least 50% by weight - based on the isocyanate component - of prepolymers.

4. The use claimed in claims 2 to 3, characterized in that the other polyols of the polyol component are selected from the group consisting of polyethers, polyesters and oleochemical polyols.

5. The use claimed in claims 2 to 4, characterized in that the other isocyanates of the isocyanate component are aromatic diisocyanates, preferably diphenyl methane diisocyanate and, in particular, technical diphenyl methane diisocyanate with a functionality of more than 2 or toluene diisocyanate.

6. The use claimed in claims 1 to 5, characterized in that an equivalent ratio of NCO to OH of 1.2:1 to 0.8:1 and preferably 1.05:1 to 0.95:1 is maintained during production of the polyurethane.

7. The use claimed in claims 1 to 6, characterized in that they have a tear propagation resistance above 10 Nmm⁻¹ and, more particularly, above 15 Nmm⁻¹.

## Revendications

1. Utilisation, comme masses ou matières d'étanchéité, de polyuréthanes, qui sont constitués
a) d'un composant polyol, qui renferme un diol dimère et/ou un triol trimère et/ou un polyéther contenant des unités de diol dimére et/ou un polyester comportant des groupes terminaux OH, qui est constitué d'acides polycarboxyliques, de préférence d'acide gras dimère ou trimère et de diols et
b) d'un composant isocyanate, qui renferme des prépolyméres, qui peuvent être obtenus par mise en réaction d'isocyanates polyfonctionnels avec un diol dimére et/ou un triol trimère et/ou avec un polyéther contenant des unités de diol dimère, et/ou avec un polyester comportant des groupes terminaux OH, qui est constitué d'acides polycarboxyliques, de préférence d'acide gras dimère et/ou trimère et de diols, au moins un des composants A ou B renfermant un acide gras dimère ou trimère ou un alcool gras dimére ou trimère comme constituants.

2. Utilisation selon la revendication 1, caractérisé en ce que le composant polyol renferme au moins 50 % en poids - par rapport au composant polyol - de diol dimère et/ou de triol trimère et/ou d'un polyéther contenant des unités de diol dimère et/ou d'un polyester comportant des groupes terminaux OH, qui est constitué d'acides polycarboxyliques, de préférence d'acide gras dimère ou trimère et de diols.

3. Utilisation selon les revendications 1 et 2, caractérisée en ce que le composant isocyanate renferme au moins 50 % en poids - par rapport au composant isocyanate - de prépolymères.

4. Utilisation selon les revendications 2 à 3, caractérisée en ce que les polyols restants du composant polyol sont sélectionnés dans le groupe formé des polyétherpolyols, des polyesterpolyols et des polyols oléochimiques.

5. Utilisation selon les revendications 2 à 4, caractérisée en ce que les isocyanates restants du composant isocyanate représentent des diisocyanates aromatiques, de préférence du diphénylméthanediisocyanate et en particulier, du diphénylméthanediisocyanate technique de fonctionnalité supérieure à 2, ou du toluylènediisocyanate.

6. Utilisation selon les revendications 1 à 5, caractérisée en ce qu'un rapport des équivalents NCO:OH de 1,2:1 à 0,8:1, de préférence de 1,05:1 à 0,95:1 est respecté.

7. Utilisation selon les revendications 1 à 6, caractérisée en ce qu'ils présentent une résistance à l'allongement d'une déchirure supérieure à 10 Nmm⁻¹, en particulier supérieure à 15 Nmm⁻¹.
